(19) Europäisches Patentamt
European Patent Office
Office européen des brevets

(11) **EP 2 642 105 A1**

(12) **DEMANDE DE BREVET EUROPEEN**

(43) Date de publication:
**25.09.2013 Bulletin 2013/39**

(21) Numéro de dépôt: **13155661.5**

(22) Date de dépôt: **18.02.2013**

(51) Int Cl.:
*F02D 41/02* (2006.01)        *F02D 41/40* (2006.01)
*F01N 9/00* (2006.01)        *F01N 3/20* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **20.03.2012 FR 1252476**

(71) Demandeur: **PEUGEOT CITROËN AUTOMOBILES SA**
**78140 Velizy-Villacoublay (FR)**

(72) Inventeurs:
• **Faure, Sebastien**
  **92500 Rueil Malmaison (FR)**
• **Reyes, Frank**
  **92500 Rueil Malmaison (FR)**

(54) **Procédé de fonctionnement d'un moteur diesel comprenant des systèmes de dépollution**

(57)    L'invention porte sur un procédé de réglage du fonctionnement d'un moteur Diesel, comprenant un système de dépollution par filtre à particules régénéré de manière périodique, un système de réduction catalytique des oxydes d'azote, ainsi que des moyens de réglage des paramètres de fonctionnement de ce moteur, ce procédé recevant des informations sur la sévérité du roulage et sur l'état de ces systèmes, et modifie de manière périodique le réglage de fonctionnement du moteur suivant un compromis résultant d'une combinaison de trois modes de fonctionnement, donnant pour un premier mode une faible émission d'oxydes d'azote $NO_x$ Bas, pour un deuxième mode une faible émission de particules Part Bas, et pour un troisième mode une faible consommation de carburant $CO_2$ Bas, ces trois modes comportant chacun un poids respectif, ce procédé positionnant ensuite le réglage de fonctionnement du moteur au barycentre (4) de ces trois poids respectifs.

*Fig.1*

EP 2 642 105 A1

**Description**

La présente invention concerne un procédé de réglages d'un moteur à combustion interne, notamment du type Diesel, ainsi qu'un calculateur de gestion d'un moteur et un véhicule automobile mettant en oeuvre un tel procédé d'optimisation.

Les moteurs Diesel émettent dans la ligne d'échappement des polluants comme des particules de suie et des oxydes d'azote « NOx », qui sont limités en quantité par les règlementations de différents pays. Des moyens permettent de traiter ces polluants pour limiter leurs émissions, mais ils ont généralement un effet sur la consommation de carburant, et donc sur les émissions de gaz carbonique « CO2 » qui sont aussi réglementées.

En particulier, il est connu de réduire les oxydes d'azote NOx par une réaction chimique utilisant une source d'ammoniac, comme de l'urée sous forme aqueuse, pour obtenir de l'azote et de l'eau. A cet effet l'urée, appelée par certains fabricants « Adblue », est injectée dans la ligne d'échappement en amont d'un catalyseur de réduction catalytique sélective « SCR » (acronyme de « Selective Catalytic Reduction » en anglais), qui réalise la réaction de réduction éliminant les oxydes d'azote.

Le système de réduction catalytique comporte un réservoir contenant l'urée, qui est consommée en plus grande quantité plus importante lors des roulages à plus grande vitesse du type route ou autoroute. Il faut alors prévoir une quantité d'urée suffisante pour obtenir dans ces cas de conduite, une autonomie minimum entre les deux remplissages qui permette de pallier à cette consommation plus élevée.

Par ailleurs pour réduire les émissions des particules, un dispositif connu, présenté notamment par le document WO- A2- 2009/014599, comporte un filtre à particules « FAP » placé dans la ligne d'échappement, qui est régénéré périodiquement par une postcombustion dans ce filtre apportant une température élevée, provoquée par une injection complémentaire de carburant dans le cylindre après la combustion, lorsque le piston est en fin de détente.

Toutefois, cette postcombustion entraîne une consommation supplémentaire de carburant, et une dilution de l'huile du moteur recevant une part de ce carburant qui n'est pas évacuée dans la ligne d'échappement. La dilution de l'huile du moteur augmente donc en fonction des postcombustions successives, et peut conduire à un taux de dilution trop élevé avant la vidange suivante, entraînant des risques de casse du moteur.

Il faut alors prévoir une surveillance de la dégradation de l'huile et un espacement de ses vidanges, qui peuvent s'adapter aux contraintes les plus sévères correspondant aux roulages aux basses vitesses du type ville, émettant le plus de particules.

De manière connue, les réglages de fonctionnement du moteur, comme par exemple le taux de recyclage des gaz d'échappement « EGR » (pour l'acronyme « Exhaust Gas recirculation » en anglais) sont étudiés pour favoriser la réduction de l'un ou de l'autre de ces polluants, les émissions d'oxydes d'azote ou de particules, en défavorisant l'autre, en fonction des critères de dépollution les plus importants. Toutefois, l'aspect consommation de carburant n'est pas pris en compte en permanence et de manière évolutive au cours de la conduite du véhicule, pour optimiser les réglages des émissions de ces deux polluants.

La présente invention a notamment pour but d'éviter ces inconvénients de la technique antérieure.

Elle propose à cet effet un procédé de réglage du fonctionnement d'un moteur thermique, notamment du type Diesel, comprenant un système de dépollution par filtre à particules FAP régénéré de manière périodique par injection complémentaire de carburant dans les chambres de combustion, un système de réduction catalytique des oxydes d'azote SCR alimenté par un réservoir en agent réducteur ou en agent précurseur d'agent réducteur, ainsi que des moyens de réglage des paramètres de fonctionnement du moteur, **caractérisé en ce qu'il** reçoit des informations sur la sévérité du roulage et sur l'état de ces systèmes, et modifie de manière périodique le réglage de fonctionnement du moteur suivant un compromis résultant d'une combinaison de trois modes de fonctionnement, donnant pour un premier mode une faible émission d'oxydes d'azote (NOx Bas) et pour un deuxième mode une faible émission de particules (Part Bas), comportant chacun un poids respectif calculé en fonction de l'évolution réalisée de leur système par rapport à une évolution cible prévue, et pour un troisième mode une faible consommation de carburant ($CO_2$ Bas), comportant un poids respectif calculé en fonction d'informations sur la consommation en carburant du moteur, ce procédé positionnant ensuite le réglage de fonctionnement du moteur au barycentre de ces trois poids respectifs.

Le terme « sévérité de roulage » est un terme bien connu dans le domaine de l'automobile: il se rapporte à une cotation de la façon de rouler du conducteur, en fonction de paramètres de fonctionnement ou de roulage bien connus du moteur/du véhicule comprenant au moins un des paramètres comprenant la vitesse instantanée, le régime, le couple du moteur etc ...

Les termes « agent réducteur » ou en « agent précurseur d'agent réducteur » désignent par exemple l'urée, disponible généralement en phase aqueuse et de décomposant en ammoniac, composé réducteur, lors de son injection sur la ligne d'échappement (on parle alors généralement de SCR « liquide ») ou l'ammoniac qui est directement injecté sous forme gazeuse sur la ligne d'échappement à partir de cartouches stockant l'ammoniac dans des sels solides (on parle alors généralement de SCR » solide »).

Un avantage du procédé d'optimisation selon l'invention, est que l'on peut dans le cas où la dégradation réelle des deux systèmes de dépollution est inférieure à l'évolution cible prévue, favoriser le mode faible consommation de carburant CO$_2$ Bas et donc la réduction des émissions de gaz carbonique CO$_2$, au détriment de ces systèmes de dépollution qui peuvent accepter alors une dégradation plus rapide en étant plus actifs.

Le procédé selon l'invention peut en outre comporter une ou plusieurs des caractéristiques suivantes, qui peuvent être combinées entre elles.

Avantageusement, le suivi de l'évolution du système de filtre à particules comporte une régulation du taux d'accroissement de la dilution courante de l'huile moteur par l'injection complémentaire de carburant, notamment par rapport à une cible qu'elle devrait avoir pour respecter le critère de dilution maximum à la prochaine vidange, si le client continue à rouler de la même manière.

La régulation du taux d'accroissement de la dilution courante peut effectuer un calcul de dilution cible recevant le résultat d'un descripteur de sévérité du roulage, la dilution maximum autorisée, le kilométrage restant avant la prochaine vidange et la dilution courante, et effectuer un calcul de dilution réalisée recevant la dilution courante, pour donner le poids respectif du mode faible émission de particules Part Bas.

Avantageusement, le suivi de l'évolution du système de réduction catalytique des oxydes d'azote, comporte une régulation de consommation d'agent réducteur ou de précurseur d'agent réducteur par rapport à une cible qu'elle devrait avoir.

La régulation de consommation d'agent réducteur ou de précurseur d'agent réducteur peut effectuer un calcul de consommation cible recevant le résultat d'un descripteur de sévérité du roulage, la quantité de d'agent réducteur ou de précurseur d'agent réducteur, notamment le volume d'urée, restant dans le réservoir, le kilométrage restant avant le remplissage d'urée et la consommation courante d'urée, et effectuer un calcul de consommation réalisée recevant la consommation courante, pour donner le poids respectif du mode faible émission d'oxydes d'azote NO$_x$ Bas.

Avantageusement, le poids maximum respectif du mode faible consommation CO$_2$ Bas est inférieur au poids respectif du mode faible émission d'oxyde d'azote NO$_x$ Bas, qui est lui- même inférieur au poids respectif du mode faible émission de particules Part Bas.

En variante, le véhicule comportant des diagnostics de dilution pris en compte par le procédé, le poids maximum respectif du mode faible consommation peut être inférieur au poids respectif du mode faible émission de particules Part Bas, qui est lui-même inférieur au poids respectif du mode faible émission d'oxyde d'azote NO$_x$ Bas.

Avantageusement, le compromis de réglage du fonctionnement du moteur, est appliqué à ce moteur avec une fréquence adaptée permettant d'éviter des brusques modifications sensibles pour les passagers.

L'invention a aussi pour objet un calculateur de gestion d'un moteur du type Diesel, mettant en oeuvre un procédé d'optimisation comportant l'une quelconque des caractéristiques précédentes.

L'invention a de plus pour objet un véhicule automobile comportant un moteur du type Diesel, mettant en oeuvre un procédé d'optimisation comportant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :

- la figure 1 présente un triangle comprenant un barycentre représentant le point de sélection des trois critères, réglage d'oxyde d'azote NO$_x$, réglage des particules et réglage de consommation CO$_2$ ;

- la figure 2 présente un schéma de la gestion en boucle ouverte du compromis oxyde d'azote NO$_x$ et particules, avec un procédé selon l'art antérieur ;

- la figure 3 présente ce même schéma comportant en plus les contraintes liées au filtre à particules FAP ;

- la figure 4 présente en détail le bloc de régulation du système du filtre à particules ;

- la figure 5 présente le même schéma comportant en plus les contraintes liées au système de réduction catalytique ;

- la figure 6 présente en détail le bloc de régulation du système de réduction catalytique ; et

- la figure 7 présente le schéma complet du procédé d'optimisation selon l'invention.

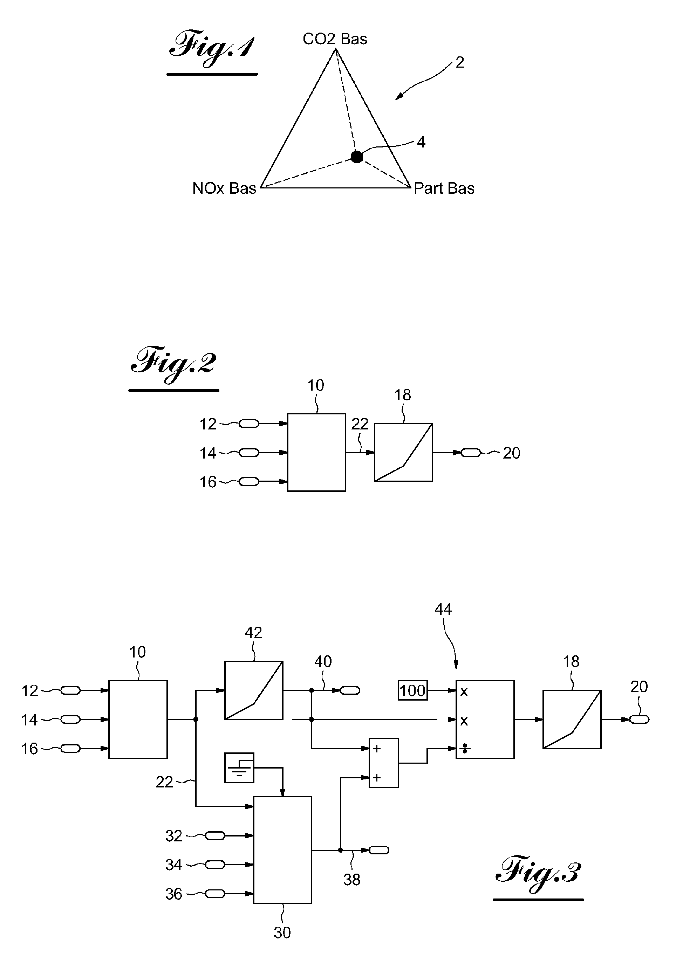

La figure 1 présente un triangle de réglage 2 comportant en bas à gauche un sommet représentant le niveau de réglage le plus bas pour les émissions d'oxydes d'azote, appelé mode NO$_x$ Bas, en bas à droite un sommet représentant le niveau de réglage le plus bas pour les émissions de particules, appelé mode Part Bas, et en haut un sommet représentant le niveau de réglage le plus bas pour les émissions de gaz carbonique, appelé mode CO$_2$ Bas, donnant la plus faible consommation de carburant.

Le point 4 situé dans le triangle de réglage 2, représente le barycentre des trois sommets comportant chacun un poids respectif qui lui est attribué par le procédé d'optimisation selon l'invention, pour obtenir le point de réglage optimum du moteur en fonction des différentes circonstances de fonctionnement du véhicule, et d'un historique de ce fonctionnement.

La figure 2 présente une gestion en boucle ouverte du compromis entre les modes $NO_x$ Bas et Part Bas, comportant un descripteur de sévérité du roulage 10 recevant différents groupes d'informations sur le fonctionnement du véhicule, comprenant un premier groupe 12 disposant de la vitesse et de l'accélération du véhicule, ainsi que du régime moteur, un deuxième groupe 14 disposant de paramètres de la thermique du moteur et de la ligne d'échappement, et un troisième groupe 16 disposant d'autres informations variées.

Le descripteur de sévérité du roulage 10 traite ces informations reçues, et transmet le résultat 22 à un système de réglage du moteur 18 comprenant des cartographies qui permettent d'établir a priori le point de fonctionnement du moteur 20 donnant le meilleur compromis entre les modes $NO_x$ Bas et Part Bas. On obtient un compromis établi en boucle ouverte, qui tient compte seulement des informations reçues à un moment donné.

La figure 3 présente la même gestion, comportant en plus les contraintes courantes ajoutées par la dilution du carburant dans l'huile moteur, pour la régénération du filtre à particules, de manière à faire varier dans le triangle de réglage 2 le poids du mode Part Bas en fonction de la sévérité du roulage.

Le schéma comporte une régulation de dilution 30 du type PI, recevant des informations sur la dilution maximum autorisée 32, sur le kilométrage restant avant la prochaine vidange d'huile 34 et sur la dilution courante 36, ainsi que le résultat 22 du descripteur de sévérité du roulage 10, pour obtenir le poids respectif du mode Part Bas 38.

Le poids respectif du mode Part Bas 38 est ensuite combiné 44 en utilisant des coefficients multiplicateurs, avec le poids respectif du mode $NO_x$ Bas 40 donné par une cartographie 42 utilisant les résultats 22 du descripteur de sévérité du roulage 10, pour obtenir le point de fonctionnement du moteur 20.

La régulation de dilution 30 permet la prise en compte de la dilution dans le choix du compromis, avec une régulation du taux d'accroissement de la dilution courante par rapport à une cible qu'elle devrait avoir pour respecter le critère de dilution maximum à la prochaine vidange, si le conducteur continue à rouler de la même manière. Ceci permet d'autoriser le passage en mode $NO_x$ Bas plus tôt si le taux d'accroissement ou dérivée de la dilution courante est plus faible que celle réellement nécessaire. On utilise alors la marge donnée par cette dilution courante plus faible, pour donner un poids respectif plus important au mode $NO_x$ Bas afin de favoriser ce mode, et d'économiser de l'urée.

Réciproquement, si la dérivée de la dilution courante est trop forte malgré un profil de roulage ne donnant théoriquement pas de problème de dilution, la régulation de dilution 30 mise en oeuvre obligera à retourner vers un compromis favorisant le mode Part Bas en donnant un poids respectif plus important à ce mode, pour sauver le moteur d'un excès de dilution et éviter de le casser, quitte à consommer plus d'urée, et à risquer de tomber en panne d'urée.

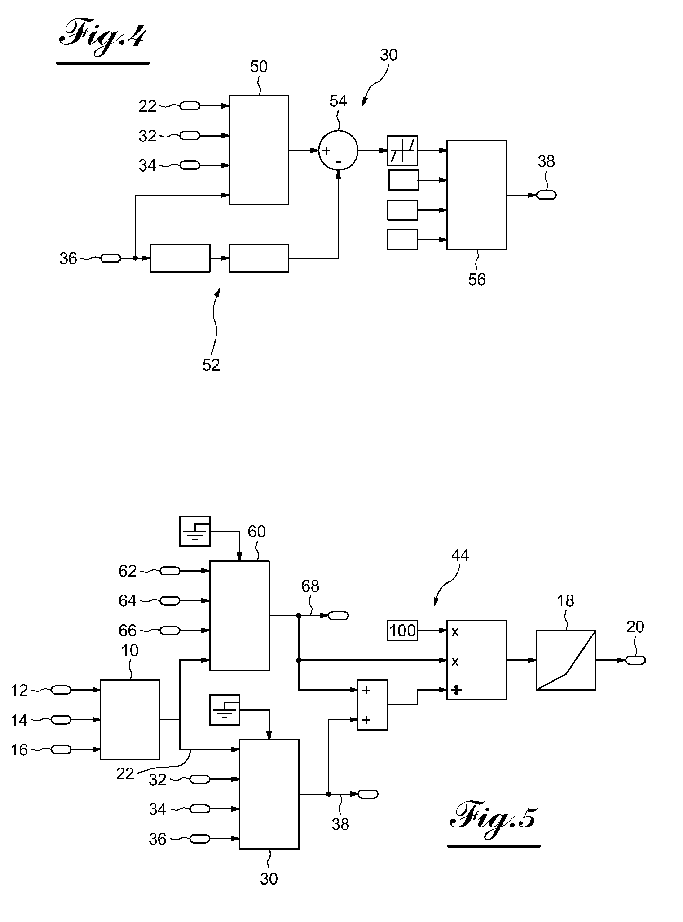

La figure 4 présente en détail un exemple de régulation de dilution 30, qui est mise en oeuvre après chaque régénération du filtre à particules, au moment où la dilution de l'huile est la plus importante suite à une injection complémentaire de carburant dans le moteur.

La régulation de dilution 30 comporte un calcul de dilution cible 50 recevant le résultat 22 du descripteur de sévérité du roulage, la dilution maximum autorisée 32, le kilométrage restant avant la prochaine vidange 34 et la dilution courante 36. Le calcul de dilution cible 50 peut reposer sur une simple division à partir de la réserve de dilution, qui est égal à la dilution maximum autorisée moins la dilution courante, divisée par la distance restante avant la prochaine vidange d'huile. Le calcul de dilution cible 50 peut aussi reposer sur un calcul plus complexe utilisant une projection non linéaire mais logarithmique de cette dilution, prenant aussi en compte l'évaporation du carburant qui est de plus en plus marquée avec l'augmentation de la dilution, et la sévérité du roulage.

La régulation de dilution 30 comporte aussi un calcul de dilution réalisée 52, recevant la dilution courante 36. La régulation de dilution réalisée 52 repose sur un calcul simple de dérivée discrète, et d'une moyenne glissante sur plusieurs régénérations successives d'indice n « RGn » :

$$(dDilution/dx)n = (Dilution\_RGn - Dilution\_RGn\text{-}1) / (xn - xn\text{-}1)$$

Les résultats de ces deux calculs sont comparés 54, et transmis à un régulateur 56 du type PI qui donne le poids respectif du mode Part Bas 38.

La figure 5 présente la même gestion, comportant en plus les contraintes courantes ajoutées par la consommation courante d'urée. Le schéma comporte une régulation de consommation d'urée 60 du type PI, par rapport au niveau moyen cible qu'elle devrait avoir, recevant des informations sur le volume d'urée restant dans le réservoir 62, sur le kilométrage restant avant le remplissage d'urée 64 et sur la consommation courante d'urée 66, ainsi que le résultat 22 du descripteur de sévérité du roulage 10, pour obtenir le poids respectif du mode $NO_x$ Bas 68.

On ajoute une régulation supplémentaire sur la consommation d'urée, comportant une action corrective plus faible que celle de la dilution, et donc un poids respectif plus faible, car elle ne doit pas prédominer sur la sauvegarde de dilution présentée ci-dessus. Cette régulation sur la consommation d'urée vient ajouter une exigence sur le système du filtre à particules FAP tant que celui-ci peut l'accepter, alors que la régulation sur la dérivée de la dilution vient relâcher cette exigence sur la dilution si cette dilution devient trop forte.

Les poids respectifs du mode $NO_x$ Bas 68 et Part Bas 38 sont ensuite combinés 44 en utilisant des coefficients multiplicateurs, pour obtenir le point de fonctionnement du moteur 20.

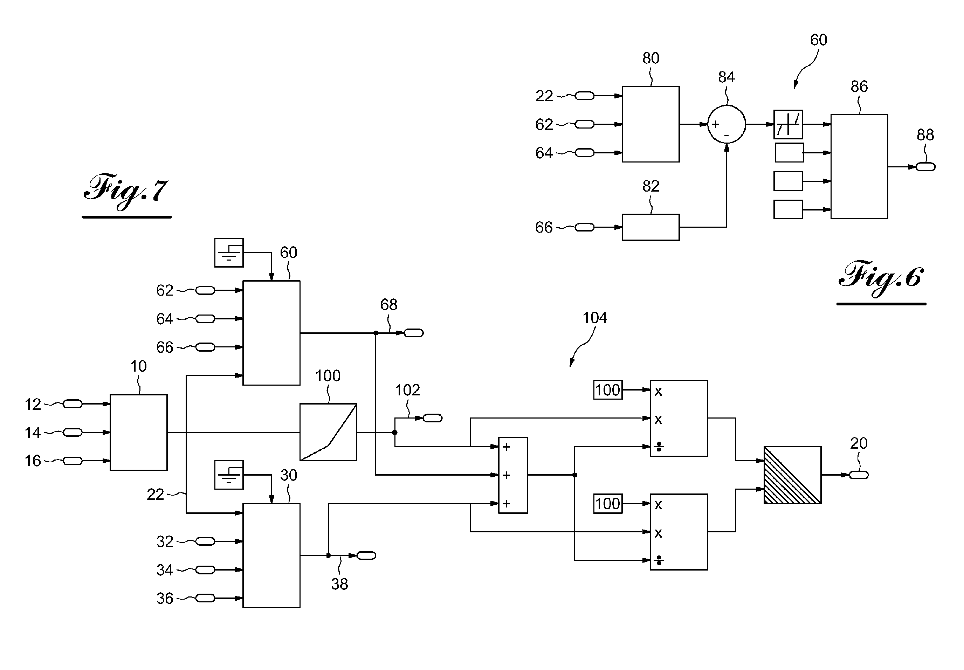

La figure 6 présente en détail un exemple de régulation de consommation d'urée 60 mise en oeuvre périodiquement après des distances parcourues qui sont constantes, représentant l'ordre de grandeur entre deux régénérations RG, soit quelques centaines de kilomètres.

La régulation de consommation d'urée 60 comporte un calcul de moyenne de consommation d'urée cible 80 recevant le résultat 22 du descripteur de sévérité du roulage, le volume d'urée restant dans le réservoir 62, le kilométrage restant avant le remplissage d'urée 64, et la consommation courante d'urée 66. La régulation de consommation d'urée 60 comporte aussi un calcul de consommation moyenne réalisée 82, recevant la consommation courante 66 pour calculer une consommation moyenne établie sur plusieurs valeurs.

Les résultats de ces deux calculs sont comparés 84, et transmis à un régulateur 86 du type PI qui donne le poids respectif du mode NOx Bas 88.

La figure 7 présente l'utilisation des deux régulations décrites ci-dessus, qui permettent dans le cas où les poids respectifs des modes NOx Bas et Part Bas sont faibles tous les deux, de favoriser la prestation consommation de carburant en donnant un poids respectif plus élevé au mode $CO_2$ Bas. On déplace alors le barycentre 4 du triangle 2, plus près du sommet $CO_2$ Bas.

Le schéma de la figure 7 repris de celui de la figure 5, comporte en plus une cartographie 100 qui reçoit l'information du descripteur de sévérité du roulage 10, pour délivrer en fonction des conditions de roulage en cours, un poids respectif du mode $CO_2$ Bas 102. Les trois poids respectifs des modes $NO_x$ Bas 68, Part Bas 38 et $CO_2$ Bas 102 sont ensuite combinés 104 en utilisant des coefficients multiplicateurs, pour obtenir le point de fonctionnement du moteur 20.

Le compromis ainsi établi pour le fonctionnement du moteur, sera appliqué à ce moteur avec une fréquence adaptée pour éviter des brusques modifications sensibles pour les passagers, en particulier concernant les prestations acoustiques, afin de générer des changements relativement continus qui ne sont pas inconfortables.

Pour respecter l'ordre de priorité des besoins en émission de polluants à la source, le poids maximum respectif du mode $CO_2$ Bas doit être inférieur au poids respectif du mode $NO_x$ Bas, qui est lui-même inférieur au poids respectif du mode Part Bas. On assure ainsi en permanence le meilleur compromis entre les émissions à la source des différents polluants, en prenant en compte l'état actuel des systèmes de dépollution, par rapport à leur état initialement prévus pour ce moment-là.

On notera que dans une variante, avec des diagnostics de dilution installés sur le véhicule, on pourrait inverser les priorités des prestations de dépollution en considérant qu'il est plus grave de ne pas traiter les oxydes d'azote NOx, plutôt que d'arrêter le client pour des risques de casse du moteur liés à une dilution excessive de l'huile. On a alors un poids maximum respectif du mode faible consommation $CO_2$ Bas inférieur au poids respectif du mode faible émission de particules Part Bas, qui est lui-même inférieur au poids respectif du mode faible émission d'oxyde d'azote $NO_x$ Bas.

On peut ainsi avec le procédé d'optimisation selon l'invention, baisser les émissions de polluants à la source, et réduire les masses, les volumes et les coûts des deux systèmes de dépollution, réduction catalytique SCR et filtre à particules FAP, par exemple en limitant le volume du réservoir d'urée, ou en limitant le volume de ce filtre à particules.

Ce procédé nécessite par ailleurs plus de cartographies décrivant les émissions de polluants à la source, pour réaliser au moins deux ou trois compromis entre les oxydes d'azote NOx, les particules et le dioxyde de carbone $CO_2$, cependant ces cartographies existent généralement déjà car elles sont nécessaires pour effectuer en amont les développements du moteur. Avantageusement, le procédé d'optimisation selon l'invention est intégré dans le calculateur de gestion du moteur thermique, ce qui représente une solution économique.

## Revendications

1. Procédé de réglage du fonctionnement d'un moteur thermique, notamment du type Diesel, comprenant un système de dépollution par filtre à particules FAP régénéré de manière périodique par injection complémentaire de carburant dans les chambres de combustion, un système de réduction catalytique des oxydes d'azote SCR alimenté par un réservoir en agent réducteur ou en agent précurseur d'agent réducteur, ainsi que des moyens de réglage des paramètres de fonctionnement du moteur, **caractérisé en ce qu'il** reçoit des informations sur la sévérité du roulage (10) et sur l'état de ces systèmes, et modifie de manière périodique le réglage de fonctionnement du moteur (20) suivant un compromis résultant d'une combinaison de trois modes de fonctionnement, donnant pour un premier mode une faible émission d'oxydes d'azote ($NO_x$ Bas) et pour un deuxième mode une faible émission de particules (Part Bas), comportant chacun un poids respectif (38, 40) calculé en fonction de l'évolution réalisée de leur système par rapport à une évolution cible prévue, et pour un troisième mode une faible consommation de carburant ($CO_2$ Bas), comportant un poids respectif (102) calculé en fonction d'informations sur la consommation en carburant du moteur (100), ce procédé positionnant ensuite le réglage de fonctionnement du moteur (20) au barycentre (4) de ces trois poids respectifs.

**2.** Procédé selon la revendication 1, **caractérisé en ce que** le suivi de l'évolution du système de filtre à particules, comporte une régulation du taux d'accroissement de la dilution courante de l'huile moteur (30) par l'injection complémentaire de carburant, par rapport à une cible qu'elle devrait avoir pour respecter le critère de dilution maximum à la prochaine vidange, si le client continue à rouler de la même manière.

**3.** Procédé selon la revendication 2, **caractérisé en ce que** la régulation du taux d'accroissement de la dilution courante (30) effectue un calcul de dilution cible (50) recevant le résultat (22) d'un descripteur de sévérité du roulage, la dilution maximum autorisée (32), le kilométrage restant avant la prochaine vidange (34) et la dilution courante (36), et effectue un calcul de dilution réalisée (52) recevant la dilution courante (36), pour donner le poids respectif du mode faible émission de particules Part Bas.

**4.** Procédé selon l'une des revendications précédentes, **caractérisé en ce que** le suivi de l'évolution du système de réduction catalytique des oxydes d'azote, comporte une régulation de consommation d'agent réducteur ou de précurseur d'agent réducteur (60) par rapport à une cible qu'elle devrait avoir.

**5.** Procédé selon la revendication 4, **caractérisé en ce que** la régulation de consommation d'urée (60) effectue un calcul de consommation cible (80) recevant le résultat (22) d'un descripteur de sévérité du roulage, la quantité d'agent réducteur ou de précurseur d'agent réducteur, et notamment le volume d'urée, restant dans le réservoir (62), le kilométrage restant avant le remplissage d'urée (64) et la consommation courante d'urée (66), et effectue un calcul de consommation réalisée (82) recevant la consommation courante (66), pour donner le poids respectif du mode faible émission d'oxydes d'azote $NO_x$ Bas.

**6.** Procédé selon l'une des revendications précédentes, **caractérisé en ce que** le poids maximum respectif (102) du mode faible consommation $CO_2$ Bas est inférieur au poids respectif (68) du mode faible émission d'oxyde d'azote $NO_x$ Bas, qui est lui-même inférieur au poids respectif (38) du mode faible émission de particules Part Bas.

**7.** Procédé selon l'une des revendications 1 à 5, **caractérisé en ce que** le véhicule comportant des diagnostics de dilution pris en compte par le procédé, le poids maximum respectif (102) du mode faible consommation $CO_2$ Bas est inférieur au poids respectif (38) du mode faible émission de particules Part Bas, qui est lui-même inférieur au poids respectif (68) du mode faible émission d'oxyde d'azote $NO_x$ Bas.

**8.** Procédé selon l'une des revendications précédentes, **caractérisé en ce que** le compromis de réglage du fonctionnement du moteur (20), est appliqué à ce moteur avec une fréquence adaptée permettant d'éviter des brusques modifications sensibles pour les passagers.

**9.** Calculateur de gestion d'un moteur du type Diesel, **caractérisé en ce qu'il** met en oeuvre un procédé d'optimisation selon l'une des revendications précédentes.

**10.** Véhicule automobile comportant un moteur du type Diesel, **caractérisé en ce qu'il** met en oeuvre un procédé d'optimisation selon l'une quelconque des revendications 1 à 8.

*Fig.1*

*Fig.2*

*Fig.3*

Fig.4

Fig.5

Fig.6

Fig.7

Europäisches
Patentamt

European
Patent Office

Office européen
des brevets

**RAPPORT DE RECHERCHE EUROPEENNE**

Numéro de la demande

EP 13 15 5661

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FR 2 900 967 A1 (PEUGEOT CITROEN AUTOMOBILES SA [FR]) 16 novembre 2007 (2007-11-16) * le document en entier * ----- | 1-10 | INV. F02D41/02 F02D41/40 F01N9/00 F01N3/20 |
| A | EP 1 908 947 A2 (NISSAN MOTOR [JP]) 9 avril 2008 (2008-04-09) * le document en entier * ----- | 1-10 | |
| A,P | EP 2 472 088 A1 (PEUGEOT CITROEN AUTOMOBILES SA [FR]) 4 juillet 2012 (2012-07-04) * le document en entier * ----- | 1-10 | |
| A | FR 2 926 323 A1 (RENAULT SAS [FR]) 17 juillet 2009 (2009-07-17) * le document en entier * ----- | 1-10 | |
| A | EP 1 568 872 A1 (PEUGEOT CITROEN AUTOMOBILES SA [FR]) 31 août 2005 (2005-08-31) * le document en entier * ----- | 1-10 | DOMAINES TECHNIQUES RECHERCHES (IPC) |
| T | EP 2 604 832 A1 (PEUGEOT CITROEN AUTOMOBILES SA [FR]) 19 juin 2013 (2013-06-19) * le document en entier * ----- | 1-10 | F02D F01N F01M |

Le présent rapport a été établi pour toutes les revendications

| Lieu de la recherche | Date d'achèvement de la recherche | Examinateur |
|---|---|---|
| La Haye | 11 juillet 2013 | Parmentier, Hélène |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 13 15 5661

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-07-2013

| Document brevet cité au rapport de recherche | | Date de publication | Membre(s) de la famille de brevet(s) | | Date de publication |
|---|---|---|---|---|---|
| FR 2900967 | A1 | 16-11-2007 | AT | 443204 T | 15-10-2009 |
| | | | EP | 2016263 A1 | 21-01-2009 |
| | | | FR | 2900967 A1 | 16-11-2007 |
| | | | WO | 2007132102 A1 | 22-11-2007 |
| EP 1908947 | A2 | 09-04-2008 | EP | 1908947 A2 | 09-04-2008 |
| | | | JP | 4905303 B2 | 28-03-2012 |
| | | | JP | 2008111428 A | 15-05-2008 |
| | | | US | 2008078169 A1 | 03-04-2008 |
| EP 2472088 | A1 | 04-07-2012 | EP | 2472088 A1 | 04-07-2012 |
| | | | FR | 2970045 A1 | 06-07-2012 |
| FR 2926323 | A1 | 17-07-2009 | AT | 514848 T | 15-07-2011 |
| | | | EP | 2235347 A1 | 06-10-2010 |
| | | | ES | 2364170 T3 | 26-08-2011 |
| | | | FR | 2926323 A1 | 17-07-2009 |
| | | | WO | 2009089967 A1 | 23-07-2009 |
| EP 1568872 | A1 | 31-08-2005 | EP | 1568872 A1 | 31-08-2005 |
| | | | FR | 2866927 A1 | 02-09-2005 |
| | | | US | 2005188685 A1 | 01-09-2005 |
| EP 2604832 | A1 | 19-06-2013 | EP | 2604832 A1 | 19-06-2013 |
| | | | FR | 2983902 A1 | 14-06-2013 |

EPO FORM P0460

Pour tout renseignement concernant cette annexe : voir Journal Officiel de l'Office européen des brevets, No.12/82

**EP 2 642 105 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009014599 A2